# EUROPÄISCHE PATENTSCHRIFT

(11) **EP 2 852 997 B1**
(45) Veröffentlichungstag und Bekanntmachung des Hinweises auf die Patenterteilung: **19.02.2020**
(21) Anmeldenummer: 13719466.8
(22) Anmeldetag: 23.04.2013
(51) Int. Cl.: H04B 3/54, H04Q 9/00, H02J 7/00

(54) **KONDITIONIERUNGSVORRICHTUNG UND VERFAHREN ZUM ZUM KONDITIONIEREN EINES DATENKANALS EINER ZELLE EINES ELEKTRISCHEN ENERGIESPEICHERS**
CONDITIONING DEVICE AND METHOD FOR CONDITIONING A DATA CHANNEL OF A CELL OF AN ELECTRIC ENERGY ACCUMULATOR
DISPOSITIF DE CONDITIONNEMENT ET PROCÉDÉ POUR CONDITIONNER UN CANAL DE DONNÉES D'UN ÉLÉMENT D'UN ACCUMULATEUR D'ÉNERGIE ÉLECTRIQUE

(30) Priorität: 21.05.2012 DE 102012208454
(43) Veröffentlichungstag der Anmeldung: 01.04.2015
(73) Patentinhaber: Robert Bosch GmbH, 70442 Stuttgart (DE)
(72) Erfinder: STROBEL, Jens, 71638 Ludwigsburg (DE); HENRICI, Fabian, 70195 Stuttgart (DE)
(86) Internationale Anmeldenummer: PCT/EP2013/058348
(87) Internationale Veröffentlichungsnummer: WO 2013/174588

(56) Entgegenhaltungen:
- US-A- 5 495 503
- US-A1- 2008 123 771
- US-A1- 2012 083 902

## Beschreibung

### Stand der Technik

Die vorliegende Erfindung bezieht sich auf eine Konditionierungsvorrichtung, eine Kommunikationsvorrichtung, auf eine Sensorvorrichtung, auf ein Batterieelement, auf einen mehrzelligen elektrischen Energiespeicher und auf ein Verfahren zum Konditionieren eines Datenkanals einer Zelle eines mehrzelligen elektrischen Energiespeichers.

Die DE 10 2010 016 175A1 beschreibt eine Batterieüberwachungs- und Steuerungsvorrichtung. Weitere Systeme und Verfahren nach dem Stand der Technik sind in US 5 495 503 A, US 2012/083902 A1, und US 2008/123771 A1 offenbart.

### Offenbarung der Erfindung

Vor diesem Hintergrund werden mit der vorliegenden Erfindung eine verbesserte Konditionierungsvorrichtung, eine verbesserte Kommunikationsvorrichtung zur Übertragung von Daten, eine verbesserte Sensorvorrichtung, ein verbessertes Batterieelement, ein verbesserter mehrzelliger elektrischer Energiespeicher und ein verbessertes Verfahren zum Konditionieren eines Datenkanals gemäß den Hauptansprüchen vorgestellt. Vorteilhafte Ausgestaltungen ergeben sich aus den jeweiligen Unteransprüchen und der nachfolgenden Beschreibung.

In oder an einer Batteriezelle erfassten Daten, beispielsweise Sensordaten, können über einen Datenkanal übertragen werden, beispielsweise an ein Steuergerät. Verläuft der Datenkanal über eine Leistungsversorgungsleitung der Batteriezelle oder über ein Gehäuse der Batteriezelle, so sind keine zusätzlichen Datenleitungen zur Übertragung der erfassten Daten erforderlich. Somit kann eine Erfassung von Sensorsignalen innerhalb einer Batterie ohne dezidierte Datenleitungen, z. B. eines CAN-Bus erfolgen. Stattdessen kann beispielsweise ein integrierter Batteriesensor mit einer sogenannten Powerline Kommunikation eingesetzt werden. Um eine fehlerfreie Kommunikation per Powerline sicherzustellen, kann eine Konditionierung des Datenkanals durchgeführt werden.

Eine Kommunikationsvorrichtung zur Übertragung von Daten über einen, über eine Leistungsversorgungsleitung einer Zelle eines mehrzelligen elektrischen Energiespeichers verlaufenden Datenkanal, weist folgende Merkmale auf:
eine erste Schnittstelle zum elektrisch leitfähigen Verbinden der Kommunikationsvorrichtung mit einer ersten Leistungsversorgungsleitung der Zelle und einer zweiten Schnittstelle zum elektrisch leitfähigen Verbinden der Kommunikationsvorrichtung mit einer zweiten Leistungsversorgungsleitung der Zelle;
eine Sendeeinrichtung, die ausgebildet ist, um von der Kommunikationsvorrichtung zu übertragende Daten unter Verwendung einer Signalfrequenz über die zweite Schnittstelle auf den Datenkanal auszugeben; und
eine Konditionierungsvorrichtung zum Konditionieren des Datenkanals.

Der mehrzellige elektrische Energiespeicher kann eine Batterie oder ein sogenanntes Batteriepack sein. Beispielsweise kann es sich um eine Lithium-Ionen-Batterie für ein Fahrzeug, beispielsweise ein Elektrofahrzeug handeln. Der elektrische Energiespeicher kann eine Mehrzahl von Batteriezellen bzw. Zellen, insbesondere in Gestalt von galvanischen bzw. elektrochemischen Sekundärzellen, als Untereinheiten des Energiespeichers aufweisen. Bei den Zellen kann es sich um leistungsstarke Zellen, insbesondere auch um Lithium-Ionen Zellen handeln. Die Leistungsversorgungsleitungen der Zelle können elektrische Anschlussleitungen der Zelle, auch Powerline genannt, sein. Beispielsweise kann die erste Leistungsversorgungsleitung mit einem Pluspol oder einer Kathode der Zelle und die zweite Leistungsversorgungsleitung kann mit einem Minuspol oder einer Anode der Zelle elektrisch leitfähig verbunden sein. Über die Leistungsversorgungsleitungen kann die Zelle elektrisch kontaktiert werden. Die Kommunikationsvorrichtung kann zwischen die Leistungsversorgungsleitungen und somit parallel zu der Zelle geschaltet werden, wenn die Schnittstellen der Kommunikationsvorrichtung mit den Leistungsversorgungsleitungen entsprechend verbunden werden. Die Schnittstellen können als Kontaktstellen ausgeführt sein. Bei den zu übertragenden Daten kann es sich um innerhalb der Kommunikationsvorrichtung gespeicherte oder erzeugte Daten oder von der Kommunikationsvorrichtung empfangene Daten handeln. Beispielsweise kann es sich um Sensordaten eines mit der Kommunikationsvorrichtung gekoppelten Sensors handeln. Die Sendeeinrichtung kann ausgebildet sein, um die zu übertragenden Daten in einer zur Übertragung der Daten über eine Stromleitung geeigneten Form über eine der Schnittstellen auf eine der Leistungsversorgungsleitungen auszugeben, um die Daten über die Leistungsversorgungsleitung zu übertragen, beispielsweise zu einer weiteren Kommunikationsvorrichtung oder zu einem Empfänger eines Steuergeräts. Die Sendeeinrichtung kann ausgebildet sein, um die zu übertragenden Daten auf die Signalfrequenz aufzumodulieren oder mit der Signalfrequenz zu modulieren. Bei der Signalfrequenz kann es sich um eine Trägerfrequenz handeln, die zum Übertragen der Daten über den Datenkanal verwendet werden kann. Auch kann es sich um eine Kommunikationsfrequenz handeln, mit der die Daten über den Datenkanal übertragen werden. Über den Datenkanal kann eine Mehrzahl von Kommunikationsvorrichtungen miteinander verbunden sein. Beispielsweise kann der Datenkanal bis zu einer Empfangseinrichtung einer nachgeschalteten Kommunikationsvorrichtung verlaufen. Weist eine nachgeschaltete Zelle eine in Bezug auf die Signalfrequenz niedrige komplexe Impedanz auf, so kann der Datenkanal durch die nachgeschaltete Zelle verlaufen. Dies ist im Allgemeinen jedoch unerwünscht. Die Konditionierungsvorrichtung kann mit der Sendeeinrichtung gekoppelt sein, um eine Sendecharakteristik der Sendeeinrichtung zu konditionieren. Zusätzlich oder alternativ kann die Konditionierungsvorrichtung mit einer oder beiden der Leistungsversorgungsleitungen gekoppelt sein, um eine Übertragungscharakteristik der Leistungsversorgungsleitung, der Leistungsversorgungsleitungen oder der Kommunikationsvorrichtung selbst zu konditionieren.

Gemäß einer Ausführungsform kann die Konditionierungsvorrichtung ausgebildet sein, um die Signalfrequenz einzustellen. Beispielsweise kann die Konditionierungsvorrichtung ausgebildet sein, um die Signalfrequenz ansprechend auf einen Empfang eines Steuersignals, ansprechend auf eine manuelle Betätigung einer Einstelleinrichtung oder ansprechend auf eine Auswertung eines über den Datenkanal übertragenen Signals einzustellen. Auf diese Weise kann die Signalfrequenz auf eine zur Übertragung über den Datenkanal geeignete Frequenz eingestellt werden. Die geeignete Frequenz kann beispielsweise von einer Resonanzfrequenz oder einer Impedanz einer oder mehrerer mit dem Datenkanal gekoppelten oder koppelbaren Zellen abhängig sein. Ein bevorzugter Frequenzbereich für die Signalfrequenz kann dadurch gekennzeichnet sein, dass innerhalb des Frequenzbereichs eine Resonanzüberhöhung des komplexen Zellwiderstands der Zellen des Energiespeichers oder zumindest einer der Kommunikationsvorrichtung nachgeschalteten Zelle des Energiespeichers vorliegt. Die Konditionierungsvorrichtung kann ausgebildet sein, um die Signalfrequenz auf einen Wert einzustellen, für den eine mit dem Datenkanal gekoppelte oder koppelbare Zelle eine hohe Impedanz aufweist.

Zusätzlich oder alternativ kann die Konditionierungsvorrichtung ausgebildet sein, um einen Wechselstromwiderstand zwischen der ersten Leistungsversorgungsleitung und der zweiten Leistungsversorgungsleitung einzustellen. Beispielsweise kann der Wechselstromwiderstand auf einen Wert eingestellt werden, der in Bezug auf die die Signalfrequenz eine hohe Impedanz repräsentiert.

Beispielsweise kann die Kommunikationsvorrichtung zumindest eine schaltbare Kapazität und zusätzlich oder alternativ zumindest eine schaltbare Induktivität aufweisen. Die Konditionierungsvorrichtung kann ausgebildet sein, um die zumindest eine schaltbare Kapazität und zusätzlich oder alternativ die zumindest eine schaltbare Induktivität zwischen die erste Leistungsversorgungsleitung und die zweite Leistungsversorgungsleitung zu schalten oder von den Leistungsversorgungsleitungen zu trennen. Auf diese Weise kann der Wechselstromwiderstand zwischen der ersten Leistungsversorgungsleitung und der zweiten Leistungsversorgungsleitung auf einen geeigneten Wert eingestellt werden.

Die Kommunikationsvorrichtung kann eine Empfangseinrichtung aufweisen, die ausgebildet ist, um über die erste Schnittstelle ein Signal zu empfangen. Die Konditionierungsvorrichtung kann ausgebildet sein, um den Datenkanal unter Verwendung des Signals zu konditionieren. Bei dem Signal kann es sich um ein Steuersignal zum Steuern der Konditionierungsvorrichtung handeln. Das Steuersignal kann beispielsweise von einem Steuergerät oder einer weiteren Kommunikationsvorrichtung bereitgestellt werden. Ferner kann es sich bei dem Signal um Daten handeln, die an die Kommunikationsvorrichtung übertragen werden, um die Kommunikationsvorrichtung zu steuern oder um von der Kommunikationsvorrichtung über die Sendeeinrichtung weiter übertragen zu werden. Die Konditionierungsvorrichtung kann ausgebildet sein, um eine Signalqualität der über die Empfangseinrichtung empfangenen Daten auszuwerten und den Datenkanal abhängig von der Signalqualität zu konditionieren. Auf diese Weise kann die Konditionierung des Datenkanals sowohl von extern gesteuert als auch autark durchgeführt werden.

Die Konditionierungsvorrichtung kann ausgebildet sein, um eine Datenübertragung durch die Kommunikationsvorrichtung hindurch zu unterbrechen. Das Unterbrechen der Datenübertragung kann durch ein Ausschalten der Kommunikationsvorrichtung oder durch eine Öffnung eines geeigneten Schalters bewirkt werden. Bei einem Unterbrechen der Datenübertragung kann ein Kommunikationssignal an einem Durchlaufen der Kommunikationsvorrichtung gehindert werden. Dadurch kann eine Übertragung des Kommunikationssignals über eine Zelle getestet werden. Genauer gesagt kann hierbei überprüft werden, ob das Kommunikationssignal durch den komplexen Widerstand der Zelle ausreichend gedämpft wird. Eine solche Dämpfung kann geprüft werden, indem beispielsweise das Kommunikationssignal von einer der unterbrochenen Kommunikationsvorrichtung vorgeschalteten Kommunikationsvorrichtung gesendet wird und anschließend ausgewertet wird, ob das Kommunikationssignal von einer der unterbrochenen Kommunikationsvorrichtung nachgeschalteten Kommunikationsvorrichtung empfangen wird. Wenn das Kommunikationssignal bei unterbrochener Kommunikationsvorrichtung die der Kommunikationsvorrichtung zugeordnete Zelle durchlaufen kann, so kann beispielsweise mittels der Konditionierungsvorrichtung der vorgeschalteten Kommunikationsvorrichtung die Signalfrequenz des Kommunikationssignals verändert werden. Alternativ oder zusätzlich können mittels der Konditionierungsvorrichtung der unterbrochenen Kommunikationsvorrichtung kapazitive oder induktive Elemente zugeschaltet werden, sodass sich die Impedanz zwischen den Leistungsversorgungsleitungen der Zelle mit der unterbrochenen Kommunikationsvorrichtung ändert.

Gemäß einer Ausführungsform kann die Konditionierungsvorrichtung ausgebildet sein, um in einem ersten Betriebszustand einen Wechselstromwiderstand oder die Impedanz zwischen der ersten Leistungsversorgungsleitung und der zweiten Leistungsversorgungsleitung in Bezug auf die Signalfrequenz zu erhöhen und in einem zweiten Betriebszustand den Wechselstromwiderstand oder die Impedanz in Bezug auf die Signalfrequenz zu verringern. Zusätzlich oder alternativ kann die Konditionierungsvorrichtung ausgebildet sein, um in dem ersten Betriebszustand die Signalfrequenz so einzustellen, dass diese im Bereich der Resonanzerhöhung der Zellen liegt und in dem zweiten Betriebszustand die Signalfrequenz so einzustellen, dass diese außerhalb oder in einem Randbereich der Resonanzerhöhung der Zellen liegt. Bei dem ersten Betriebszustand kann es sich um einen Normalbetriebszustand handeln, bei dem Daten wie bei einer Eimerkette von Kommunikationsvorrichtung zu Kommunikationsvorrichtung weitergereicht werden. Bei dem zweiten Betriebszustand kann es sich um einen Notbetriebszustand handeln, bei dem Daten sehr schnell, unter Umgehung der Kommunikationsvorrichtungen direkt über die Zellen übertragen werden. Durch die direkte Übertragung kann beispielsweise ein Alarmsignal sehr schnell übertragen werden.

Eine Sensorvorrichtung für eine Zelle eines mehrzelligen elektrischen Energiespeichers weist folgende Merkmale auf:
eine Erfassungseinrichtung zum Erfassen von Sensordaten hinsichtlich der Zelle; und
eine genannte Kommunikationsvorrichtung, die ausgebildet ist, um die Sensordaten von der Erfassungseinrichtung zu Empfangen und die zu übertragenden Daten basierend auf den Sensordaten zu erzeugen.

Die Sensorvorrichtung kann zwischen die Leistungsversorgungsleitungen der Zelle geschaltet werden. Bei der Erfassungseinrichtung kann es sich um zumindest eine Sensoreinrichtung, ein Sensorelement oder dergleichen zur Erfassung zumindest einer Zustandsgröße der Zelle handeln. Bei der Zustandsgröße kann es sich beispielsweise um eine Temperatur, eine Spannung oder einen Druck handeln. Die Erfassungseinrichtung kann ausgebildet sein, um die zumindest eine erfasste Zustandsgröße in Gestalt der Sensordaten auszugeben oder abrufbar bereitzustellen. Die Sendeeinrichtung der Kommunikationsvorrichtung kann ausgebildet sein, um die Sensordaten als die zu übertragenden Daten auszusenden.

Ein Batterieelement für einen mehrzelligen elektrischen Energiespeicher weist folgende Merkmale auf:
eine Zelle des mehrzelligen elektrischen Energiespeichers, wobei die Zelle eine erste Leistungsversorgungsleitung und eine zweite Leistungsversorgungsleitung aufweist; und
eine genannte Sensorvorrichtung, wobei die Kommunikationsvorrichtung der Sensorvorrichtung über die erste Schnittstelle elektrisch leitfähig mit der ersten Leistungsversorgungsleitung und über die zweite Schnittstelle elektrisch leitfähig mit der zweiten Leistungsversorgungsleitung der Zelle verbunden ist.

Mehrere Batterieelemente können in einem oder mehreren Strängen zu dem Energiespeicher verschaltet werden. Die Sensorvorrichtung kann zur Überwachung der Zelle eingesetzt werden. Dabei können die von der Sensorvorrichtung erfassten Daten über eine der Leistungsversorgungsleitungen der Zelle ausgesendet werden. Die Sensorvorrichtung kann innerhalb oder außerhalb einer Hülle oder eines Gehäuses der Zelle angeordnet sein. Die Impedanz des Batterieelements kann durch das beschriebene Zuschalten zumindest einer Kapazität oder Induktivität verändert werden.

Ein mehrzelliger elektrischer Energiespeicher weist folgende Merkmale auf:
zumindest zwei genannte Batterieelemente, die in einer Reihenschaltung oder in einer Parallelschaltung angeordnet sind.

Der Energiespeicher kann beispielsweise eine Batterie für Elektrofahrzeuge darstellen. Der Energiespeicher kann beispielsweise einhunder oder mehr Zellen umfassen. Alle oder zumindest einige der Zellen können als Batterieelemente ausgeführt sein. Indem die Leistungsversorgungsleitungen der Zellen als Datenkanal oder Datenkanäle verwendet werden, ist beispielsweise zur Überwachung von Spannung und Temperatur der einhundert oder mehr Zellen kein großer Verkabelungsaufwand notwendig. Stattdessen kann ein integrierter Batteriesensor verwendet werden, der einen großen Vorteil aufgrund der per Powerline Kommunikation beispielsweise an ein zentrales Steuergerät des Energiespeichers übermittelbaren Daten bietet. Durch Nutzung der bereits vorhandenen Stromleitungen zwischen den Zellen kann komplett auf eine Einzelmessverkabelung der Zellen verzichtet werden.

Der mehrzellige elektrische Energiespeicher kann zumindest eine Schalteinrichtung mit einem Schalter und einer parallel zu dem Schalter geschaltete Überbrückungskapazität aufweisen. Dabei kann die Schalteinrichtung mit zumindest einer Leistungsversorgungsleitung einer der Zellen des mehrzelligen elektrischen Energiespeichers elektrisch leitfähig verbunden sein und der Datenkanal kann bei einem geöffneten Zustand des Schalters über die Überbrückungskapazität verlaufen. Beispielsweise kann die Schalteinrichtung zwischen zwei benachbarten Zellen angeordnet sein. Alternativ kann die Schalteinrichtung parallel zu einer oder einer Mehrzahl von Zellen geschaltet sein. Ferner kann die Schalteinrichtung in einer Leistungsversorgungsleitung angeordnet sein, die einen Batteriepol des Energiespeichers ausbildet. Auf diese Weise kann eine Datenübertragung innerhalb des Energiespeichers sowie in den Energiespeicher hinein als auch aus dem Energiespeicher heraus stattfinden, auch wenn ein Stromfluss innerhalb des Energiespeichers aufgrund eines geöffneten Schalters einer Schalteinrichtung unterbrochen ist.

Gemäß Ausführungsformen der vorliegenden Erfindung kann bewirkt werden, dass eine Impedanz der Zellen, insbesondere aufgrund induktiver Effekte, einen ausreichend hohen Wert erreicht, um Sende- und Empfangsseite der Zellen und somit der mit den Zellen gekoppelten Kommunikationsvorrichtungen voneinander zu isolieren. Dabei ist eine geeignete Wahl der Signalfrequenz für die Datenübertragung innerhalb des Sensorsystems von Bedeutung. Auch kann zumindest eine Induktivität und/oder eine Kapazität zwischen die Leistungsversorgungsleitungen einer Zelle geschaltet werden. Mittels der Konditionierungsvorrichtungen kann der Datenkanal so angepasst werden, dass eine resonante Überhöhung eines komplexen Widerstandes bzw. einer Impedanz der Zellen erreicht wird. Dadurch kann eine gute Trennung zwischen Eingangs- und Ausgangsseite bzw. Empfangs- und Sendeseite der Kommunikationsvorrichtung erreicht werden. Durch Wahl der Signalfrequenz insbesondere im Megahertzbereich erreicht die komplexe Impedanz einer Zelle vorteilhaft hohe Werte, beispielsweise Werte von über 10 Ohm bis weit über 100 Ohm oder sogar mehreren 1000 Ohm. Insbesondere kann die Konditionierungsvorrichtung ausgebildet sein, um innerhalb der Batterieelemente bei bestimmten Signalfrequenzen Schwingkreise bzw. Resonanz zu erzeugen, um eine Resonanzüberhöhung des komplexen Widerstandes bzw. der Impedanz der Zelle zu erreichen. Insbesondere durch die zuschaltbare Induktivität und/oder Kapazität, beispielsweise zumindest eine diskrete oder integrierte Kapazität bzw. Induktivität, kann die Resonanzüberhöhung gezielt günstig beeinflusst werden. Dabei kann die Impedanz der Zelle, insbesondere aufgrund induktiver Effekte, einen ausreichend hohen Wert erreichen, um Sende- und Empfangsseite der Kommunikationsvorrichtung voneinander zu isolieren. Somit kann verhindert werden, dass ein Eingang und ein Ausgang der Kommunikationsvorrichtung über die Zelle kurzgeschlossen werden.

Ein Verfahren zur Übertragung von Daten über einen, über eine Leistungsversorgungsleitung einer Zelle eines mehrzelligen elektrischen Energiespeichers verlaufenden Datenkanal, umfasst die folgenden Schritte:
Konditionieren des Datenkanals; und
Ausgeben von zu übertragenden Daten auf den Datenkanal unter Verwendung einer Signalfrequenz.

Mit dem Verfahren wird beispielsweise ein Kommunikationsverfahren zwischen einem oder mehrerer Sensoren und einem oder mehreren Steuergeräten innerhalb einer oder mehrerer Batterien geschaffen. Es kann sich dabei um ein Datenkanalkonditionierungsverfahren für eine Kommunikation von Sensoren in Batteriepacks handeln.

In Verbindung mit dem Verfahren zur Kommunikation kann eine vorstehend genannte Vorrichtung vorteilhaft eingesetzt bzw. verwendet werden. Die Schritte des Verfahrens können von geeigneten Einrichtungen einer geeigneten Vorrichtung, beispielsweise einer Kommunikationsvorrichtung umgesetzt werden.

Gemäß einer Ausführungsführungsform kann die Konditionierungsvorrichtung getrennt von der Kommunikationsvorrichtung eingesetzt werden. Beispielsweise kann eine erste Kommunikationsvorrichtung, die eine oder keine Konditionierungsvorrichtung aufweist, in einer ersten Zelle angeordnet sein und eine Konditionierungsvorrichtung kann in einer zweiten Zelle angeordnet sein. Die Konditionierungsvorrichtung kann ausgebildet sein, um den von der ersten Kommunikationsvorrichtung der ersten Zelle verwendeten Datenkanal zu konditionieren. Dazu kann die Konditionierungsvorrichtung ausgebildet sein, um eine Impedanz des Datenkanals anzupassen. Zusätzlich oder alternativ kann die Konditionierungsvorrichtung ausgebildet sein, um ein Einstellsignal zum Einstellen einer von der ersten Kommunikationsvorrichtung der ersten Zelle zur Datenübertragung verwendeten Signalfrequenz an die erste Kommunikationsvorrichtung der ersten Zelle auszugeben.

Eine Konditionierungsvorrichtung zum Konditionieren eines Datenkanals einer Zelle eines mehrzelligen elektrischen Energiespeichers ist dadurch gekennzeichnet, dass die Konditionierungsvorrichtung ausgebildet ist, um eine zur Übertragung von Daten über den Datenkanal geeignete Signalfrequenz und zusätzlich oder alternativ einen Wechselstromwiderstand des Datenkanals zu konditionieren.

Die Konditionierungsvorrichtung kann zusammen mit einer Kommunikationsvorrichtung oder unabhängig von einer Kommunikationsvorrichtung verwendet werden. Beispielsweise kann die Konditionierungsvorrichtung baulich getrennt von einer Kommunikationsvorrichtung angeordnet sein, deren Datenkanal mittels der Konditionierungsvorrichtung konditioniert wird. Der Datenkanal kann über eine Leistungsversorgungsleitung und/oder über eine Zellgehäusewand und/oder über ein Batteriegehäuse verlaufen. Dabei kann eine von zwei Leistungsversorgungsleitungen der Zelle mit der Zellgehäusewand elektrisch leitfähig verbunden sein. Daher kann die Konditionierungsvorrichtung nicht nur bei einer auf dem Eimerkettenprinzip basierenden Datenübertragung, sondern auch bei anderen Transceivern eingesetzt werden. Entsprechend kann eine zur Datenübertragung eingesetzte Kommunikationsvorrichtung eine einfache Schnittstelle zu einer oder mehreren Leistungsversorgungsleitungen und/oder einem Zelgehäuse oder Batteriegehäuse aufweisen.

Entsprechend kann die Konditionierungsvorrichtung ausgebildet sein, um den Wechselstromwiderstand einer ersten Leistungsversorgungsleitung der Zelle, einer zweiten Leistungsversorgungsleitung der Zelle, einer elektrischen Verbindung zwischen der ersten Leistungsversorgungsleitung und der zweiten Leistungsversorgungsleitung, einer Zellgehäusewand der Zelle oder eines Batteriegehäuses des mehrzelligen elektrischen Energiespeichers einzustellen.

Dazu kann die Konditionierungsvorrichtung zumindest eine schaltbare Kapazität und/oder zumindest eine schaltbare Induktivität aufweisen und ausgebildet sein, um die zumindest eine schaltbare Kapazität und/oder zumindest eine schaltbare Induktivität mit dem Datenkanal zu koppeln, um den Wechselstromwiderstand des Datenkanals zu konditionieren.

Die Konditionierungsvorrichtung kann eine Empfangseinrichtung aufweisen, die ausgebildet ist, um ein Signal zu empfangen. Die Konditionierungsvorrichtung kann dabei ausgebildet sein, um den Datenkanal unter Verwendung des Signals zu konditionieren. Das Signal kann beispielsweise von einem Steuergerät oder einer Kommunikationsvorrichtung bereitgestellt werden. Das Signal kann über den Datenkanal oder über einen separaten Kommunikationskanal empfangen werden. Bei dem Signal kann es sich um über den Datenkanal an eine Kommunikationsvorrichtung ausgesendete Daten oder von einer Kommunikationsvorrichtung ausgesendete Daten handeln. Die Konditionierungsvorrichtung kann ausgebildet sein, um eine Signalqualität des über die Empfangseinrichtung empfangenen Signals auszuwerten und den Datenkanal abhängig von der Signalqualität zu konditionieren..

Die Konditionierungsvorrichtung kann ausgebildet sein, um in einem ersten Betriebszustand den Wechselstromwiderstand in Bezug auf die Signalfrequenz zu erhöhen und in einem zweiten Betriebszustand den Wechselstromwiderstand in Bezug auf die Signalfrequenz zu verringern.

Die Konditionierungsvorrichtung kann Teil einer Kommunikationsvorrichtung sein oder einer Kommunikationsvorrichtung beigeordnet sein.

Eine Kommunikationsvorrichtung zur Übertragung von Daten über einen Datenkanal einer Zelle eines mehrzelligen elektrischen Energiespeichers verlaufenden Datenkanal weist folgende Merkmale auf:
eine Schnittstelle zum elektrisch leitfähigen Verbinden der Kommunikationsvorrichtung mit dem Datenkanal;
eine Übertragungseinrichtung, die ausgebildet ist, um von der Kommunikationsvorrichtung zu übertragende Daten unter Verwendung einer Signalfrequenz über die Schnittstelle auf den Datenkanal auszugeben; und
eine Konditionierungsvorrichtung zum Konditionieren des Datenkanals.

Eine entsprechende Kommunikationsvorrichtung kann im Zusammenhang mit einer Sensorvorrichtung eingesetzt werden. Ein mehrzelliger elektrischer Energiespeicher kann zumindest eine mit einem Datenkanal gekoppelte Konditionierungsvorrichtung aufweisen. Beispielsweise kann der Energiespeicher zumindest eine Zelle aufweisen, die wiederum eine Konditionierungsvorrichtung aufweist.

Ein Verfahren zum Konditionieren eines Datenkanals einer Zelle eines mehrzelligen elektrischen Energiespeichers umfasst die folgenden Schritte:
Konditionieren einer zur Übertragung von Daten über den Datenkanal geeigneten Signalfrequenz und/oder eines Wechselstromwiderstands des Datenkanals.

Unter einer Vorrichtung kann vorliegend ein elektrisches Gerät, beispielsweise eine integrierte Schaltung verstanden werden, das Signale verarbeitet und in Abhängigkeit davon Steuer- und/oder Datensignale ausgibt. Eine Schnittstelle der Vorrichtung kann hard- und/oder softwaremäßig ausgebildet sein. Bei einer hardwaremäßigen Ausbildung kann die Schnittstelle beispielsweise Teil eines sogenannten System-ASICs sein, der verschiedenste Funktionen der Vorrichtung beinhaltet.

Die Erfindung wird anhand der beigefügten Zeichnungen beispielhaft näher erläutert. Es zeigen:
- Fig. 1: eine schematische Darstellung eines mehrzelligen elektrischen Energiespeichers gemäß einem Ausführungsbeispiel der vorliegenden Erfindung;
- Fig. 2: eine schematische Darstellung eines mehrzelligen elektrischen Energiespeichers gemäß einem Ausführungsbeispiel der vorliegenden Erfindung;
- Fig. 3: eine schematische Darstellung einer Sensorvorrichtung für eine Zelle eines mehrzelligen elektrischen Energiespeichers gemäß einem Ausführungsbeispiel der vorliegenden Erfindung;
- Fig. 4: eine schematische Darstellung einer Kommunikationsvorrichtung gemäß einem Ausführungsbeispiel der vorliegenden Erfindung;
- Fig. 5: eine Reihenschaltung aus zwei Zellen eines mehrzelligen elektrischen Energiespeichers gemäß einem Ausführungsbeispiel der vorliegenden Erfindung;
- Fig. 6: ein Diagramm hinsichtlich einer Konditionierung einer komplexen Impedanz eines Verbunds aus einer Zelle und einem Batteriesensor gemäß einem Ausführungsbeispiel der vorliegenden Erfindung;
- Fig. 7: ein Ablaufdiagramm eines Verfahrens zur Übertragung von Daten über einen Datenkanal; und
- Fig. 8: eine Konditionierungsvorrichtung gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

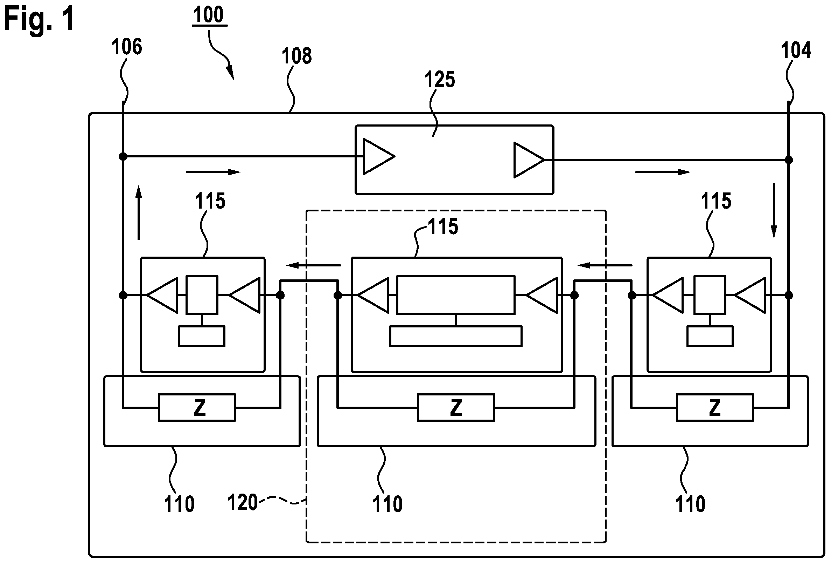

Fig. 1 zeigt eine schematische Darstellung eines mehrzelligen elektrischen Energiespeichers 100 gemäß einem Ausführungsbeispiel der vorliegenden Erfindung. Bei dem Energiespeicher kann es sich um eine Batterie handeln. Der Energiespeicher 100 weist einen ersten Batteriepol 104 und einen zweiten Batteriepol 106 auf, die sich aus einem Gehäuse 108 des Energiespeichers 100 erhaus erstrecken. Der Energiespeicher 100 weist eine Mehrzahl von Zellen 110, auch Batteriezellen genannt auf, die, miteinander verbunden über ihre Leistungsversorgungsleitungen in einer Reihenschaltung zwischen den Batteriepolen 104, 106 verschaltet sind. Jede der Zellen 110 weist eine Impedanz Z auf. Jeder der Zellen 110 ist eine Sensorvorrichtung 115 zugeordnet. Ein Verbund aus einer Zelle 110 und einer Sensorvorrichtung 115 wird als ein Batterieelement 120 bezeichnet. Der Energiespeicher 100 weist somit eine Reihenschaltung aus, gemäß diesem Ausführungsbeispiel drei Batterieelementen 120 auf. Der Energiespeicher 100 weist ferner ein Steuergerät 125 auf, das zwischen die Batteriepole 120 und somit parallel zu der Reihenschaltung aus den Batterieelementen 120 geschaltet ist.

Eine Sensorvorrichtung 115 einer Zelle 110 ist parallel zu der Zelle 110 zwischen die Leistungsversorgungsleitungen der Zelle 110 geschaltet. Die Sensorvorrichtungen 115 weisen jeweils eine Erfassungseinrichtung, beispielsweise einen Sensor oder eine Messeinheit, zum Erfassen zumindest einer physikalischen Eigenschaft der zugeordneten Zelle 110 und eine Kommunikationsvorrichtung zum Übertragen von Daten, beispielsweise von bezüglich der Zelle 110 erfassten Sensordaten auf. Die Kommunikationsvorrichtungen können beispielsweise jeweils eine Empfangseinrichtung und eine Sendeeinrichtung aufweisen. Über die Sendeeinrichtung können Daten ausgesendet werden und über eine Leistungsversorgungsleitung an eine nachgeschaltete Sensorvorrichtung 115 übertragen werden. Über die Empfangseinrichtung können von einer vorgeschalteten Sensorvorrichtung 115 über eine Leistungsversorgungsleitung übertragene Daten empfangen werden. Die Empfangseinrichtung und die Sendeeinrichtung einer Kommunikationseinrichtung können beispielsweise über ein Schieberegister miteinander verbunden sein.

Das Steuergerät 125 kann ausgebildet sein, um Steuerdaten an die Sensorvorrichtungen 115 aussenden. Die Steuerdaten können von Sensorvorrichtung 115 zu Sensorvorrichtung 115 weitergeleitet werden. Ansprechend auf die Steuerdaten können die Sensorvorrichtungen 115 beispielsweise erfasste Sensordaten aussenden oder Datenkanäle konditionieren, die zur Übertragung der Daten über die Leistungsversorgungsleitungen verlaufen. Von einer Sensorvorrichtung 115 ausgesendete Daten können über die nachgeschalteten Sensorvorrichtungen 115 bis zum Steuergerät 125 weitergeleitet werden. Das Steuergerät 125 kann mit einer außerhalb des Energiespeichers 100 angeordneten zentralen Steuervorrichtung gekoppelt sein.

Im Betrieb können in einer möglichen Realisierungsvariante des Verfahrens schrittweise jeweils benachbarte oder voneinander beabstandete Sensorvorrichtungen 115 oder das Steuergerät 125 und eine Sensorvorrichtung 115 miteinander kommunizieren. Dabei kann eine Kommunikation in eine Richtung verlaufen, wie es beispielsweise durch die Pfeile dargestellte Datenflussrichtung angedeutet ist. Das heißt, dass ein Datum, beispielsweise ein einziges Bit, von dem Steuergerät 125 zu der nachgeschalteten ersten Sensorvorrichtung 115 übermittelt wird, diese Sensorvorrichtung 115 das Bit dann an die zweite Sensorvorrichtung 115 übermittelt und diese zweite Sensorvorrichtung 115 wiederum das Bit an die dritte Sensorvorrichtung 115 übermittelt, welche das Bit dann wieder an das Steuergerät 125 sendet. Es entsteht also gewissermaßen eine Eimerkette, bei der Bits reihum vom Steuergerät 125 durch die Sensorvorrichtungen 115 und zurück zum Steuergerät 125 gesendet werden. Dabei können mehrere aufeinanderfolgende Bits ein Datenwort darstellen, welches z. B. eine Sensoradresse und/oder einen Befehl und/oder ein Datenpaket mit Kommunikationsdaten umfasst. In jeder der Sensorvorrichtungen 115 können mittels einer Steuereinrichtung empfangene Bits geändert und/oder hinzugefügt werden, bevor das Datenwort weiter übermittelt wird. So kann eine logisch bidirektionale Kommunikationsverbindung unter den Sensorvorrichtungen 115 und dem Steuergerät 125 aufgebaut werden. Die Kommunikation kann auch in wechselnden Richtungen erfolgen.

Für die Kommunikation zwischen dem Steuergerät 125 und den Sensorvorrichtungen 115 können unterschiedliche geeignete Kommunikationsverfahren und Kommunikationsprotokolle eingesetzt werden. Beispielsweise können die Sensorvorrichtungen 115 mit eindeutigen Adressen versehen sein und das Steuergerät 125 kann ausgebildet sein, um einen oder mehrerer der Sensorvorrichtungen 115 mittels der eindeutigen Adressen zu adressieren. Ansprechend auf eine Adressierung durch das Steuergerät 125 kann die adressierte Sensorvorrichtung 115 oder können die adressierten Sensorvorrichtungen 115 ausgebildet sein, um Kommunikationsdaten an das Steuergerät 115 auszusenden. Auch können die Sensorvorrichtungen 115 ausgebildet sein, um ohne eine Adressierung durch das Steuergerät 125 Kommunikationsdaten an das Steuergerät 125 auszusenden. Beispielsweise kann eine Sensorvorrichtung 115 ausgebildet sein, um abhängig von durch die Sensorvorrichtung 115 erfassten Sensordaten, beispielsweise abhängig von einem Verlauf oder einem Wert erfasster Sensordaten, Kommunikationsdaten an das Steuergerät 125 auszusenden. Beispielsweise kann eine Sensorvorrichtung 115 ausgebildet sein, um unter Ignorierung anderer gespeicherter oder empfangener Kommunikationsdaten jederzeit eine Notfallmeldung an das Steuergerät 115 auszusenden.

Um eine Datenübertragung zwischen benachbarten Sensorvorrichtungen 115 zu ermöglichen, ist es erforderlich, dass die Zellen 110 hinsichtlich des Datenkanals, über den die zu übertragenden Daten übertragen werden, keine Kurzschlussverbindungen darstellen. Mit anderen Worten soll vermieden werden, dass die zu übertragende Daten durch die Zellen 110 hindurch übertragen werden und somit die Sensorvorrichtungen 115 umgehen können. Dazu kann entweder die Signalfrequenz, beispielsweise die Trägerfrequenz der zu übertragenenden Daten an die Impedanz Z der Zellen 110 angepasst werden oder es kann eine Gesamtimpedanz, bestehend aus der Impedanz Z der Zellen 100 und einer Impedanz von Elementen der Sensorvorrichtungen 115, beispielsweise von zwischen die Leistungsversorgungsleitungen einer Zelle geschalteten Kapazitäten oder Induktivitäten so angepasst werden, dass die zu übertragenden Daten nicht durch die Zellen 110 hindurch übertragen werden.

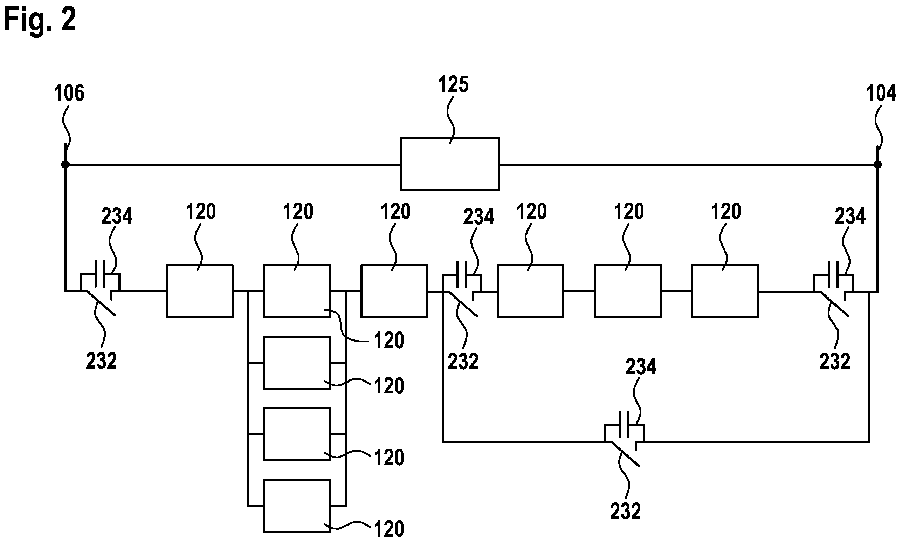

Fig. 2 zeigt eine schematische Darstellung eines mehrzelligen elektrischen Energiespeichers gemäß einem Ausführungsbeispiel der vorliegenden Erfindung. Der Energiespeicher weist, wie anhand von Fig. 1 beschriebenen, eine Mehrzahl von Batterieelementen 120 auf. Gemäß diesem Ausführungsbeispiel sind die Mehrzahl von Batterieelementen 120 in einer Reihenschaltung aus beispielhaft sechs Batterieelementen 120 angeordnet, wobei parallel zu einem der Batterieelemente 120 beispielhaft drei weitere Batterieelemente 120 parallel geschaltet sind. Abweichend von dem gezeigten Ausführungsbeispiel kann eine beliebige Kombination aus Reihenschaltung und Parallelschaltung von einer beliebigen Anzahl von Batterieelementen 120 realisiert sein.

Der Energiespeicher weist eine Mehrzahl von Schalteinrichtungen auf, die jeweils einen Schalter 232 und eine parallel zu dem Schalter 232 geschaltete Überbrückungskapazität 234 aufweisen. Die Schalteinrichtungen sind in Leistungsversorgungsleitungen der Zellen einzelner der Batterieelemente 120 angeordnet. Eine Schalteinrichtung ist in einer Überbrückungsleitung zum Überbrücken einer Reihenschaltung aus drei der Batterieelemente 120 angeordnet. Durch die Schalteinrichtungen können einzelne oder alle der Batterieelemente 120 aktiviert oder deaktiviert werden, also in einen Stromkreislauf durch den Energiespeicher eingebunden werden oder herausgenommen werden. Ist ein Schalter 232 einer Schalteinrichtung oder mehrerer Schalteinrichtungen geöffnet, so ist zwar ein Gleichstromfluss über die jeweilige Schalteinrichtung unterbrochen, jedoch können mit einer geeigneten Signalfrequenz, beispielsweise im Megahertz Bereich übertragene Daten die jeweilige Schaltreinrichtung über die jeweilige Kapazität 234 passieren. Bei den Kapazitäten 234 handelt es sich beispielsweise um Kondensatoren oder parasitäre Kapazitäten der Schalter 232.

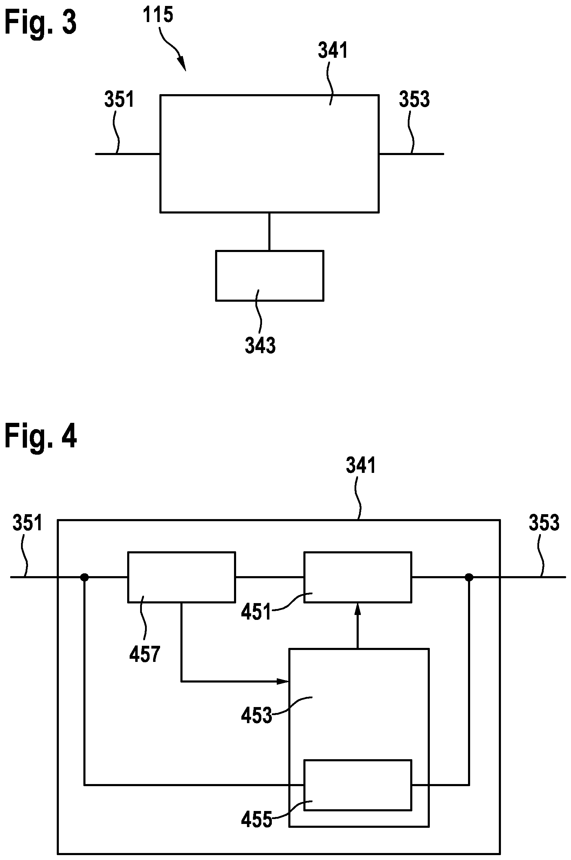

Fig. 3 zeigt eine schematische Darstellung einer Sensorvorrichtung 115 für eine Zelle eines mehrzelligen elektrischen Energiespeichers gemäß einem Ausführungsbeispiel der vorliegenden Erfindung. Die Sensorvorrichtung 115 kann beispielsweise im Zusammenhang mit dem in Fig. 1 gezeigten Energiespeicher eingesetzt werden.

Die Sensorvorrichtung 115 weist eine Kommunikationsvorrichtung 341 und eine Erfassungseinrichtung 343 auf. Die Kommunikationsvorrichtung 341 weist eine erste Schnittstelle 351, beispielsweise in Form einer ersten Anschlussleitung zum Verbinden der Kommunikationsvorrichtung 341 mit einer ersten Leistungsversorgungsleitung und eine zweite Schnittstelle 353, beispielsweise in Form einer zweiten Anschlussleitung zum Verbinden der Kommunikationsvorrichtung 341 mit einer zweiten Leistungsversorgungsleitung der Zelle des Energiespeichers auf. Die Erfassungseinrichtung 343 ist ausgebildet, um beispielsweise eine physikalische Größe wie einen Druck oder eine Temperatur der Zelle zu erfassen und einen entsprechenden Sensorwert an die Kommunikationsvorrichtung 341 bereitzustellen. Beispielsweise kann die Erfassungseinrichtung 343 ausgebildet sein, um einen Sensorwert an eine Sendeeinrichtung, eine Steuereinrichtung oder eine Speichereinrichtung der Kommunikationsvorrichtung 341 bereitzustellen und die Kommunikationsvorrichtung 341 kann ausgebildet sein, um den Sensorwert als zu übertragende Daten über eine der Schnittstellen 351, 353 auszusenden.

Fig. 4 zeigt eine schematische Darstellung einer Kommunikationsvorrichtung 341 zur Übertragung von Daten über einen, über eine Leistungsversorgungsleitung einer Zelle eines mehrzelligen elektrischen Energiespeichers verlaufenden Datenkanal, gemäß einem Ausführungsbeispiel der vorliegenden Erfindung. Die Kommunikationsvorrichtung 341 kann beispielsweise im Zusammenhang mit der anhand von Fig. 3 beschriebenen Sensorvorrichtung 115 eingesetzt werden.

Die Kommunikationsvorrichtung 341 weist eine erste Schnittstelle 351 zum elektrisch leitfähigen Verbinden der Kommunikationsvorrichtung 341 mit einer ersten Leistungsversorgungsleitung einer Zelle und eine zweiten Schnittstelle 353 zum elektrisch leitfähigen Verbinden der Kommunikationsvorrichtung 341 mit einer zweiten Leistungsversorgungsleitung der Zelle auf. Ferner weist die Kommunikationsvorrichtung 341 eine Sendeeinrichtung 451 und eine Konditionierungsvorrichtung 453 auf.

Die Sendeeinrichtung 451 ist ausgebildet, um von der Kommunikationsvorrichtung 341 zu übertragende Daten unter Verwendung einer Signalfrequenz über die zweite Schnittstelle 353 auf den Datenkanal auszugeben. Die Konditionierungsvorrichtung 453 ist ausgebildet, um den Datenkanal zu konditionieren.

Gemäß einem Ausführungsbeispiel ist die Konditionierungsvorrichtung 453 ausgebildet, um die von der Sendeeinrichtung 451 verwendete Signalfrequenz zu verändern. Dazu kann die Konditionierungsvorrichtung 453 beispielsweise ausgebildet sein, um eine Einstellung eines Frequenzgenerators zur Generierung der Signalfrequenz zu verändern.

Gemäß einem weiteren Ausführungsbeispiel ist die Konditionierungsvorrichtung 453 ausgebildet, um in Bezug auf die Signalfrequenz eine komplexe Impedanz zwischen den Schnittstellen 351, 353 zu verändern. Dazu kann die Konditionierungsvorrichtung 453 eine Anordnung 455 aus zumindest einer schaltbaren Kapazität und zusätzlich oder alternativ zumindest einer schaltbaren Induktivität umfassen, die mit den Schnittstellen 351, 353 elektrisch leitfähig verbunden werden können oder von den Schnittstellen 351, 353 getrennt werden können. Die Anordnung 455 kann eine Mehrzahl von schaltbaren Kapazitäten und schaltbaren Induktivitäten aufweisen, die in einer geeigneten Verschaltung, beispielsweise bestehend aus Reihenschaltungen und Parallelschaltungen zwischen die Schnittstellen 351, 353 geschaltet werden können.

Gemäß einem Ausführungsbeispiel ist die Konditionierungsvorrichtung 453 ausgebildet, um in Bezug auf die Signalfrequenz die komplexe Impedanz zwischen den Schnittstellen 351, 353 zu verringern. Auf diese Weise können die zu übertragenden Daten unter Umgehung der Kommunikationsvorrichtung 341 direkt über die Zellen übertragen werden. Dies ermöglicht eine sehr schnelle Datenübertragung. Beispielsweise kann die Konditionierungsvorrichtung 453 ausgebildet sein, um die komplexe Impedanz ansprechend auf den Empfang eines Notsignals zu verringern. Bei dem Notsignal kann es sich um ein Signal handeln, das beispielsweise von dem Steuergerät des Energiespeichers, einer Kommunikationsvorrichtung des Energiespeichers oder einer der Kommunikationsvorrichtung zugeordneten Erfassungseinrichtung generiert wird.

Gemäß einem Ausführungsbeispiel weist die Kommunikationsvorrichtung 341 eine Empfangseinrichtung 457 auf. Die Empfangseinrichtung 457 ist ausgebildet, um an der ersten Schnittstelle 351 ankommende Daten zu empfangen.

Beispielsweise können die empfangenen Daten von der Empfangseinrichtung 457 an die Sendeeinrichtung 451 weitergeleitet und von der Sendeeinrichtung 451 ausgesendet werden. Ferner können die empfangenen Daten zur Steuerung der Konditionierungsvorrichtung 453 verwendet werden. Beispielsweise kann die Konditionierungsvorrichtung 453 ausgebildet sein, um die Konditionierung des Datenkanals ansprechend auf die empfangenen Daten durchzuführen. Somit kann die von der Konditionierungsvorrichtung 453 durchgeführte Konditionierung von einer zentralen Stelle, beispielsweise von einem Steuergerät gesteuert werden. Auch kann die Konditionierungsvorrichtung 453 eine Auswerteeinrichtung zum Auswerten oder eine Messeinrichtung zum Messen einer Signalqualität eines über den Datenkanal übertragenen Signals aufweisen und ausgebildet sein, um die Konditionierung in Abhängigkeit von der ausgewerteten oder gemessenen Signalqualität durchzuführen.

Die Kommunikationsvorrichtung 341 kann eine weitere Schnittstelle zu einer Erfassungseinrichtung aufweisen, wie sie anhand von Fig. 3 beschrieben ist.

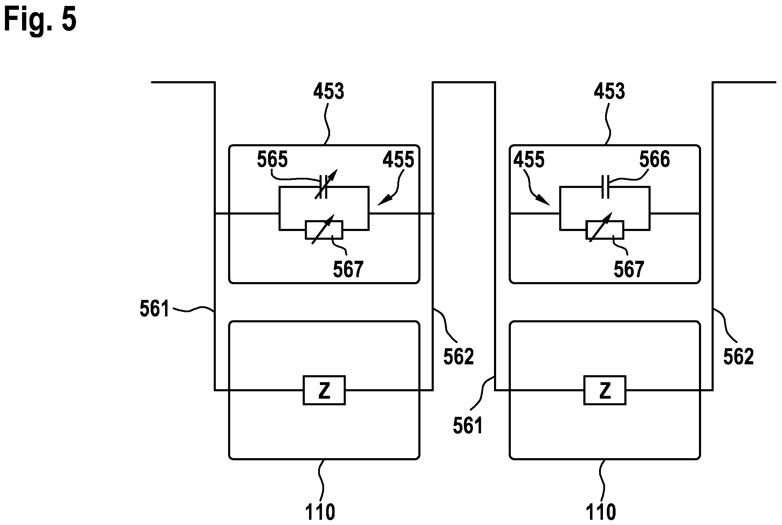

Fig. 5 zeigt eine Reihenschaltung aus zwei Zellen 110 eines mehrzelligen elektrischen Energiespeichers, wie er beispielsweise anhand von Fig. 1 beschrieben ist, gemäß einem Ausführungsbeispiel der vorliegenden Erfindung. Die Zellen 110 weisen jeweils eine erste Leistungsversorgungsleitung 561 und eine zweite Leistungsversorgungsleitung 562 auf. Die zweite Leistungsversorgungsleitung 562 der links gezeigten Zelle 110 ist mit der ersten Leistungsversorgungsleitung 561 der rechts gezeigten Zelle 110 elektrisch leitfähig verbunden. Je nach Anordnung innerhalb des Energiespeichers können die Leistungsversorgungsleitungen 561, 562 als Anschlüsse des Energiespeichers oder als Leistungszellverbindung dienen. Jede der Zellen 110 weist einen komplexen Innenwiderstand Z zwischen den jeweiligen Leistungsversorgungsleitungen 561, 562 auf.

Zwischen die Leistungsversorgungsleitungen 561, 562 der Zellen 110 ist jeweils eine Konditionierungsvorrichtung 453 geschaltet, die jeweils eine Anordnung 455 mit einer Kapazität 565, 566 und einer Induktivität 567 aufweist. Die Konditionierungsvorrichtung 453 kann beispielsweise Teil einer Sensorvorrichtung oder einer Kommunikationsvorrichtung oder als eine eigenständige Einheit realisiert sein.

Ein Kapazitätswert der Kapazität 565 ist ebenso wie ein Induktivitätswert der Induktivität 567 einstellbar. Die Kapazität 566 der rechts gezeigten Anordnung 455 ist im Unterschied zu der Kapazität 565 als eine Festkapazität mit einem fest eingestellten Kapazitätswert ausgeführt. Die Anordnungen 455 können jeweils ein Feld, ein sogenanntes Array aus Kapazitäten 565, 566 und Induktivitäten 567 aufweisen, die integriert in einer integrierten Schaltung, beispielsweise einem ASIC oder diskret ausgeführt sein können.

Gemäß einem Ausführungsbeispiel können die Kapazitäten 565, 566 und Induktivitäten 567, beispielsweise gesteuert durch eine Steuereinrichtung der Konditionierungsvorrichtung 453 oder durch eine extern zu der Konditionierungsvorrichtung 453 angeordnete Steuereinrichtung, zur Impedanzanpassung in ihrem Wert geändert werden. Ferner können Verbindungen zwischen Anschlüssen der Kapazitäten 565, 566 und Induktivitäten 567 untereinander oder mit den Leistungsversorgungsleitungen 561, 562 getrennt oder geschlossen werden, beispielsweise gesteuert durch eine entsprechende Steuereinrichtung. Auf diese Weise können zusätzlich zu dem komplexen Innenwiderstand Z der Zellen 110 weitere komplexe Widerstände zwischen den Leistungsversorgungsleitungen 561, 562 einer Zelle 110 realisiert werden, die sich zusammen mit den komplexen Innenwiderständen Z der Zellen 110 zu resultierenden Gesamtwiderständen kombinieren. Der resultierende Gesamtwiderstand kann so eingestellt werden, dass über die Leistungsversorgungsleitungen 561, 562 der Zellen 110 mit einer vorbestimmten oder einer einstellbaren Signalfrequenz übertragene Daten nicht durch die Zellen 110 hindurch übertragen werden.

Somit kann die in Fig. 5 gezeigte Schaltung als eine schematische Darstellung einer Signalkonditionierungsvorrichtung aufgefasst werden.

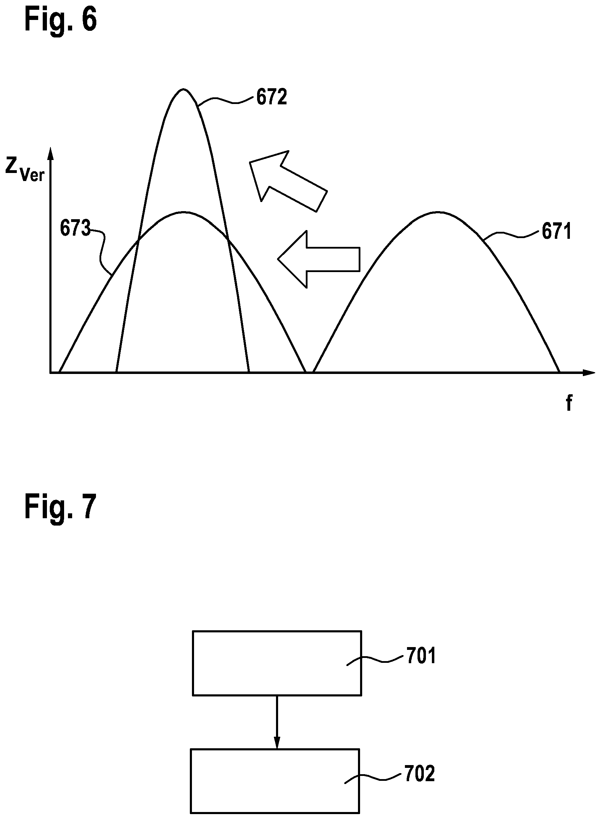

Fig. 6 zeigt anhand eines Diagramms eine Konditionierung einer komplexen Impedanz eines Verbunds aus einer Zelle und einem Batteriesensor gemäß einem Ausführungsbeispiel der vorliegenden Erfindung. Bei dem Verbund kann es sich beispielsweise um einen Verbund handeln, wie er anhand der Fig. 5 beschrieben ist. Auf der Abszisse ist die Frequenz f und auf der Ordinate die Impedanz Z_{Ver} des Verbunds aufgetragen.

Gezeigt ist eine Ausgangskurve 671, eine zweite Kurve 672, die eine Erhöhung der Güte durch eine erste Konditionierung darstellt und eine dritte Kurve 673, die eine Erniedrigung der Mittenfrequenz durch eine zweite Konditionierung darstellt. Es kann auch eine Kombination aus den Kurven 672, 673 durch eine geeignete weitere Konditionierung erreicht werden.

Im Folgenden werden Ausführungsbeispiele der vorliegenden Erfindung anhand der vorangegangenen Figuren beschrieben.

Ein Ausführungsbeispiel besteht in der Ausbildung eines Batteriesensors 115 mit einer Kommunikationsschnittstelle 341, bzw. einer Batterie welche solche Sensoren 115 enthält. Die Kommunikationsschnittstelle 341 ist ausgebildet, um eine Konditionierung des Datenkanals, also dem Weg der Daten von und zu den Sensoren 115 und dem Steuergerät 125 über die Batterieelemente 120 einsetzt.

Die Kommunikation erfolgt über eine, gegebenenfalls lange Serien- und Parallelschaltung von Batteriezellen 110, typischerweise von beispielsweise 100 Zellen 110, wobei die Sensoren 115 einschließlich ihrer Kommunikationseinrichtungen 341 parallel zu den Batteriezellen 110 angeschlossen sind. Die Impedanz Z der Batteriezellen 110 und die aus geometrischer Anordnung und Verschaltung resultierenden Impedanzen der Sensoren 115 können je nach Aufbau und Auswahl von Batteriezellen 110 variieren und sich über weitere Einflussfaktoren wie Alterungsprozesse der Batteriezellen 110 und Temperatureffekte ändern.

Ist der komplexe Widerstand, die Impedanz Z, der Zellen 110 im gewählten Frequenzbereich der Kommunikation zu gering, so kann zum einen die Empfängereinheit 457 oder Empfangseinrichtung und/oder die Sendeeinheit 451 oder Sendeeinrichtung des Batteriesensors 115 "kurzgeschlossen" werden, als auch über den Widerstand Z die Signalenergie am Sensor 115 vorbeigeleitet werden. Letzteres ist insbesondere für die Ausprägung einer seriellen Powerline Kommunikation von Nachteil. In beiden vorangenannten Fällen zu geringer Zellimpedanz Z ist Datenkommunikation nicht oder nur unzulänglich möglich.

Grundsätzlich kann das hier beschriebene Konditionierungsverfahren, das beispielsweise von der beschriebenen Kommunikationsvorrichtung 341 umgesetzt werden kann, eine Kombination aus mehreren nachfolgend genannten Verfahren einsetzen, um eine Datenübertragung über die Leistungsversorgungsleitungen 561, 562 der Zellen 110 zu optimieren. Alternativ kann auch nur eines der Verfahren angewandt oder verwirklicht werden.

Ein erstes Konditionierungsverfahren basiert auf einer Signalfrequenzanpassung. Dabei wird eine Anpassung der Signalfrequenz der zu übertragenden Daten, also beispielsweise die Kommunikationsfrequenz oder die Trägerfrequenz durchgeführt, sodass die Signalfrequenz in einen Bereich der Resonanzüberhöhung des komplexen Zellwiderstandes Z der Zellen 110 oder der Batterieelemente 120 fällt. Die Festlegung der Signalfrequenz kann fix beim Design oder beim Einbau erfolgen, es kann aber auch eine Nachführung und online-Optimierung vorgesehen sein. Ein bevorzugter Frequenzbereich für die Signalfrequenz liegt gemäß einem Ausführungsbeispiel im Bereich von 10 MHz bis 100 MHz oder von von 10 MHz bis 200MHz, da hier bei typischen Geometrien von prismatischen Hochenergiezellen 110 die Resonanzüberhöhung liegt.

Da gerade bei einer größeren Anzahl von Batteriezellen 110 und einer komplexen Verdrahtung der Zellen 110 in der Batterie 100 Unterschiede in den Resonanzfrequenzen einzelner Zellimpedanzen Z zu erwarten sind, kann hierbei ein multifrequentes bzw. breitbandiges Signalfrequenzband für die Signalfrequenz vorteilhaft sein.

Ein zweites Konditionierungsverfahren basiert auf der Verwendung von zuschaltbaren Elementen 455 in Form von diskreten oder integrierten Kapazitäten 565, 566 oder Induktivitäten 567 im Sensor 115, um die Resonanzüberhöhung in ihrer Mittenfrequenz und Güte gezielt positiv zu beeinflussen. Eine solche Beeinflussung ist in Fig. 6 schematisch dargestellt. Die technische Umsetzung dazu ist in Fig. 5 schematisch gezeigt am Beispiel einer aus zwei Zellen 110 bestehenden Batterie 100, wobei sich das Beispiel entsprechend auch für Batterien 100 mit mehr Zellen 110 anwenden lässt. Felder 455 aus Kapazitäten 565, 566 und Induktivitäten 567 können über Schalter über die Leistungsversorgungsleitungen 561, 562 mit den Zellpolen der Zellen 110 verbunden werden. Durch den Aufbau als Feld können verschiedene Kombinationen aus Induktivität 567 und Kapazität 565, 566 in Reihen- oder Serienschaltung erzeugt werden. Alternativ zu einem Feld 455 mit vielen Verstellmöglichkeiten kann beispielsweise auch nur eine einzige Festkapazität 566 eingesetzt werden oder andere Kombinationen aus zumindest einer Induktivität 567 und zusätzlich oder alternativ zumindest einer Kapazität 565, 566. In Kombination und Wechselwirkung mit den Feldern 455 der weiteren in der Batterie 100 verbauten Sensoren 115 und der komplexen Impedanz Z der eigenen Zelle 110 und den komplexen Impedanzen der weiteren in der Batterie 100 verbauten Zellen 110 kann über Parallel- und Serienresonanz der für das gewählte Kommunikationsverfahren optimale wirksame komplexe Widerstand Z_{Ver} zwischen den mit den Zellpolen verbundenen Leistungsversorgungsleitungen 561, 562 und zwischen den Batteriepolen 104, 106 eingestellt werden.

Das erste und das zweite Konditionierungsverfahren können auch gleichzeitig angewandt werden, um eine optimale Lösung zu erzielen, beispielsweise hinsichtlich des Energieverbrauchs und des Störabstands.

Bei einer genauen Kenntnis und zusätzlich oder alternativ einer genauen Messung und zur Verfügung stehendem Regelverfahren der Resonanzfrequenz kann gemäß einem Ausführungsbeispiel vorteilhaft eine möglichst hohe Güte dieser Resonanzüberhöhung gewählt werden. Besteht keine Regelmöglichkeit der Resonanzfrequenz, wird auf eine ausreichende Breitbandigkeit der Resonanzüberhöhung und damit eine geringere Güte des Resonanzkreises ausgelegt, um eventuell auftretende Verschiebungen der Resonanzfrequenz durch Änderung der Impedanz Z der Zelle 110 durch Einflüsse wie beispielsweise Alterung oder Temperatureffekte zu berücksichtigen.

Der Batteriesensor 115 kann eine Schaltung zur Messung der Signalqualität enthalten, um die Signalfrequenz und zusätzlich oder alternativ die Anordnungen 455 gezielt zu steuern.

Gemäß einem Ausführungsbeispiel, bei dem eine Umsetzung eines Kommunikationsverfahrens nach dem Eimerkettenprinzip erfolgt, ist eine Möglichkeit zur Abschaltung der Kommunikationseinrichtungen 341 zumindest einzelner der Sensoren 115 vorgesehen. Dadurch lässt sich die ungewollte Signalweiterleitung durch die Zelle 110, deren zugeordnete Kommunikationseinrichtung 341 abgeschaltet ist messen und kompensieren. Eine entsprechende Messung kann von einer Messeinrichtung durchgeführt sein, die beispielsweise in dem Steuergerät 125 oder in einer Kommunikationseinrichtung 341 angeordnet sein kann. Basierend auf einem Messergebnis einer solchen Messeinrichtung kann der Datenkanal, beispielsweise durch eine Änderung der Signalfrequenz oder einer geeigneten Verwendung der Anordnung 455 so konditioniert werden, dass die ungewollte Signalweiterleitung durch die Zelle 110 verhindert oder zumindest bis auf ein vorbestimmtes Maß reduziert wird.

In einem weiteren Ausführungsbeispiel für diese Kommunikationsart kann eine gezielte Widerstandreduzierung vorgesehen sein, wodurch eine geringe Latenz der Signalübertragung z. B. im Falle einer vorrangig notwendigen Datenübermittlung eines sicherheitsrelevanten Alarmsignals möglich wird.

Fig. 7 zeigt ein Ablaufdiagramm eines Verfahrens zur Übertragung von Daten über einen Datenkanal, der über zumindest eine Leistungsversorgungsleitung einer Zelle eines mehrzelligen elektrischen Energiespeichers verläuft, gemäß einem Ausführungsbeispiel der vorliegenden Erfindung. In einem Schritt 701 wird der Datenkanal konditioniert und in einem Schritt 702 werden zu übertragende Daten auf den Datenkanal unter Verwendung einer Signalfrequenz ausgesendet. Die Schritte 701, 702 können mehrfach wiederholt, parallel zueinander oder in vertauschter Reihenfolge ausgeführt werden. Das Verfahren kann beispielsweise von einer im Vorhergehenden beschriebenen Kommunikationsvorrichtung ausgeführt werden. Der Schritt 701 kann unter Umsetzung eines Konditionierungsverfahren umgesetzt werden, wie es im Vorhergehenden beschrieben ist.

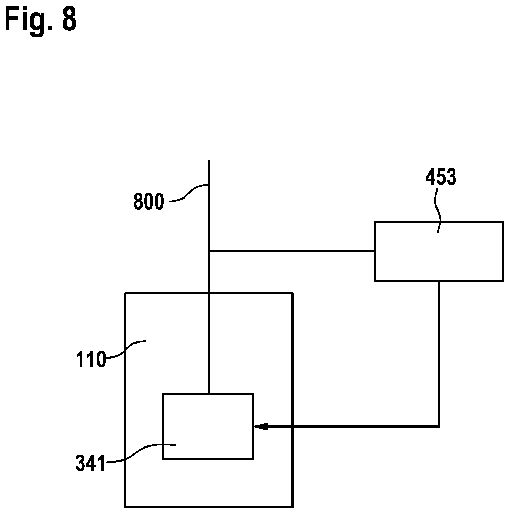

Fig. 8 zeigt eine Konditionierungsvorrichtung 453 zum Konditionieren eines Datenkanals 800 einer Zelle 110 eines einzelligen oder mehrzelligen elektrischen Energiespeichers, gemäß einem Ausführungsbeispiel der vorliegenden Erfindung. Der Datenkanal 800 kann unidirektional oder bidirektional ausgeführt sein und von einer Kommunikationsvorrichtung 341 der Zelle 110 zur Datenübertragung verwendet werden. Der Datenkanal 800 kann über eine oder mehrere Leistungsversorgungsleitungen oder über ein Gehäuse der Zelle 110 verlaufen.

Die Konditionierungsvorrichtung 453 kann beispielsweise Teil der Zelle 110, Teil der Kommunikationsvorrichtung 341, Teil einer Kommunikationsvorrichtung einer weiteren Zelle oder eines Steuergeräts, wie es beispielsweise in Fig. 1 gezeigt ist oder eine eigenständige Einheit sein. Gemäß dem in Fig. 8 gezeigten Ausführungsbeispiel ist die Konditionierungsvorrichtung 453 räumlich von der Zelle 110 getrennt angeordnet.

Gemäß einem Ausführungsbeispiel ist die Konditionierungsvorrichtung 453 ausgebildet, um wie bereits anhand anderer Ausführungsbeispiele beschrieben, eine von der Kommunikationsvorrichtung 341 verwendete Signalfrequenz zur Datenübertragung über den Datenkanal 800 anzupassen. Dazu ist die Konditionierungsvorrichtung 453 ausgebildet, um ein Einstellsignal zum Einstellen der Signalfrequenz über eine Schnittstelle an die Kommunikationsvorrichtung 341 auszugeben.

Gemäß einem weiteren Ausführungsbeispiel ist die Konditionierungsvorrichtung 453 ausgebildet, um wie bereits anhand anderer Ausführungsbeispiele beschrieben, einen Wechselstromwiderstand des Datenkanals 800 anzupassen. Dazu kann die Konditionierungsvorrichtung 453 eine elektrisch leitfähige Verbindung zu einem den Datenkanal 800 repräsentierenden Leiter aufweisen und ausgebildet sein, um den Datenkanal 800 über die elektrisch leitfähige Verbindung mit zumindest einem Element zum Anpassen des Wechselstromwiderstands zu koppeln. Alternativ kann die Konditionierungsvorrichtung 453 ausgebildet sein, um ein Schaltsignal an eine mit dem Datenkanal 800 gekoppelte Schaltung zur Anpassung des Wechselstromwiderstands des Datenkanals 800 auszugeben. Die Schaltung kann beispielsweise zumindest eine zuschaltbare Kapazität und/oder zumindest eine zuschaltbare Induktivität aufweisen.

Die Konditionierungsvorrichtung 453 kann ausgebildet sein, um den Datenkanal 800 ansprechend auf den Empfang eines Steuersignals oder ansprechend auf eine Auswertung eines über den Datenkanal 800 übertragenen Signals zu konditionieren.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Konditionierungsvorrichtung (453) zum Konditionieren eines Datenkanals (800) zumindest einer Batteriezelle (110) einer mehrzelligen Batterie (100), wobei die Konditionierungsvorrichtung (453) ausgebildet ist, um eine zur Übertragung von Daten über den Datenkanal geeignete Signalfrequenz und/oder einen Wechselstromwiderstand (Z; Z_{Ver}) des Datenkanals der zumindest einen Batteriezelle (110) zu konditionieren, wobei die Konditionierungsvorrichtung (453) zumindest eine schaltbare Kapazität (565) und zumindest eine schaltbare Induktivität (567) aufweist und **dadurch gekennzeichnet, dass** die Konditionierungsvorrichtung (453) zwischen eine erste Leistungsversorgungsleitung (561) und eine zweite Leistungsversorgungsleitung (562) der zumindest einen Batteriezelle (110) der mehrzelligen Batterie (100) geschaltet ist, und ausgebildet ist, um die zumindest eine schaltbare Kapazität und die zumindest eine schaltbare Induktivität mit dem Datenkanal (800) zu koppeln, so dass der Datenkanal (800) über zumindest eine der Leistungsversorgungsleitungen (561, 562) der zumindest einen Batteriezelle (110) der mehrzelligen Batterie verläuft, um den Wechselstromwiderstand (Z; Z_{Ver}) des Datenkanals zur Übertragung von Daten über zumindest eine der Leistungsversorgungsleitungen (561, 562) der zumindest einen Batteriezelle (110) der mehrzelligen Batterie zu konditionieren.

2. Konditionierungsvorrichtung (453) gemäß Anspruch 1, bei der die Konditionierungsvorrichtung (453) ausgebildet ist, um den Wechselstromwiderstand (Z; Z_{Ver}) einer ersten Leistungsversorgungsleitung (561) der Batteriezelle (110), einer zweiten Leistungsversorgungsleitung (562) der Batteriezelle (110), einer elektrischen Verbindung zwischen der ersten Leistungsversorgungsleitung und der zweiten Leistungsversorgungsleitung, einer Zellgehäusewand der Batteriezelle (110) oder eines Batteriegehäuses (108) der mehrzelligen Batterie (100) einzustellen.

3. Konditionierungsvorrichtung (453) gemäß einem der vorangegangenen Ansprüche mit einer Empfangseinrichtung, die ausgebildet ist, um ein Signal zu empfangen, und bei dem die Konditionierungsvorrichtung (453) ausgebildet ist, um den Datenkanal (800) unter Verwendung des Signals zu konditionieren.

4. Konditionierungsvorrichtung (453) gemäß einem der vorangegangenen Ansprüche, die ausgebildet ist, um in einem ersten Betriebszustand den Wechselstromwiderstand (Z; Z_{Ver}) in Bezug auf die Signalfrequenz zu erhöhen und in einem zweiten Betriebszustand den Wechselstromwiderstand in Bezug auf die Signalfrequenz zu verringern.

5. Kommunikationsvorrichtung (341) zur Übertragung von Daten über einen, Datenkanal (800) einer Batteriezelle (110) einer mehrzelligen Batterie (100) verlaufenden Datenkanal, mit folgenden Merkmalen:
einer Schnittstelle (351, 353) zum elektrisch leitfähigen Verbinden der Kommunikationsvorrichtung mit dem Datenkanal; einer Sendeeinrichtung (451), die ausgebildet ist, um von der Kommunikationsvorrichtung zu übertragende Daten unter Verwendung einer Signalfrequenz über die Schnittstelle auf den Datenkanal auszugeben; und einer Konditionierungsvorrichtung (453) gemäß einem der vorangegangenen Ansprüche zum Konditionieren des Datenkanals.

6. Sensorvorrichtung für eine Batteriezelle (110) einer mehrzelligen Batterie (100), mit folgenden Merkmalen: einer Erfassungseinrichtung (343) zum Erfassen von Sensordaten hinsichtlich der Batteriezelle (110); und einer Kommunikationsvorrichtung (341) gemäß Anspruch 5, die ausgebildet ist, um die Sensordaten von der Erfassungseinrichtung zu empfangen und die zu übertragenden Daten basierend auf den Sensordaten zu erzeugen.

7. Batterieelement (120) für eine mehrzellige Batterie (100), wobei das Batterieelement folgende Merkmale aufweist: eine Batteriezelle (110) der mehrzelligen Batterie, wobei die Batteriezelle (100) eine erste Leistungsversorgungsleitung (561) und eine zweite Leistungsversorgungsleitung (562) aufweist; und eine Sensorvorrichtung (115) gemäß Anspruch 6.

8. Mehrzellige Batterie (100), mit folgenden Merkmalen:
zumindest zwei Batterieelemente (120) gemäß Anspruch 7, die in einer Reihenschaltung oder in einer Parallelschaltung angeordnet sind.

9. Verfahren zum Konditionieren eines Datenkanals (800) zumindest einer Batteriezelle (110) einer mehrzelligen Batterie (100), das die folgenden Schritte umfasst:
Elektrisch leitfähiges Verbinden einer Konditionierungsvorrichtung (453) mit einer ersten Leistungsversorgungsleitung (561) der Batteriezelle (110) und einer zweiten Leistungsversorgungsleitung (562) der Batteriezelle (110);
Konditionieren (701) einer zur Übertragung von Daten über den Datenkanal der zumindest einen Batteriezelle (110) geeigneten Signalfrequenz und/oder eines Wechselstromwiderstands (Z; Z_{Ver}) des Datenkanals der zumindest einen Batteriezelle (110) mittels der Konditionierungsvorrichtung (453), wobei die Konditionierungsvorrichtung (453) mittels Felder (455) aus Kapazitäten (565, 566) und Induktivitäten (567) oder andere Kombinationen aus zumindest einer Induktivität (567) und zusätzlich oder alternativ zumindest einer Kapazität (565, 566) ausgebildet ist, die zumindest eine schaltbare Kapazität (565, 566) und die zumindest eine schaltbare Induktivität (567) mit dem Datenkanal (800) über Schalter mit Leistungsversorgungsleitungen (561, 562) der Batteriezelle (110) zu koppeln, so dass der Datenkanal (800) über zumindest eine der Leistungsversorgungsleitungen (561, 562) der zumindest einen Batteriezelle (110) der mehrzelligen Batterie verläuft.

## Claims

1. Conditioning apparatus (453) for conditioning a data channel (800) of at least one battery cell (110) of a multi-cell battery (100), wherein the conditioning apparatus (453) is designed to condition a signal frequency suitable for transmitting data via the data channel and/or an AC resistance (Z; Zᵥₑᵣ) of the data channel of the at least one battery cell (110), wherein the conditioning apparatus (453) has at least one switchable capacitance (565) and at least one switchable inductance (567) and **characterized in that** the conditioning apparatus (453) is connected between a first power supply line (561) and a second power supply line (562) of the at least one battery cell (110) of the multi-cell battery (100), and is designed to couple the at least one switchable capacitance and the at least one switchable inductance to the data channel (800) such that the data channel (800) runs via at least one of the power supply lines (561, 562) of the at least one battery cell (110) of the multi-cell battery in order to condition the AC resistance (Z; Zᵥₑᵣ) of the data channel for transmitting data via at least one of the power supply lines (561, 562) of the at least one battery cell (110) of the multi-cell battery.

2. Conditioning apparatus (453) according to Claim 1, in which the conditioning apparatus (453) is designed to set the AC resistance (Z; Zᵥₑᵣ) of a first power supply line (561) of the battery cell (110), of a second power supply line (562) of the battery cell (110), of an electrical connection between the first power supply line and the second power supply line, of a cell housing wall of the battery cell (110) or of a battery housing (108) of the multi-cell battery (100).

3. Conditioning apparatus (453) according to either of the preceding claims, having a reception device, which is designed to receive a signal, and in which the conditioning apparatus (453) is designed to condition the data channel (800) using the signal.

4. Conditioning apparatus (453) according to one of the preceding claims, which is designed to increase the AC resistance (Z; Zᵥₑᵣ) in relation to the signal frequency in a first operating state and to reduce the AC resistance in relation to the signal frequency in a second operating state.

5. Communication apparatus (341) for transmitting data via a, data channel running data channel (800) of a battery cell (110) of a multi-cell battery (100), having the following features:
an interface (351, 353) for electrically conductively connecting the communication apparatus to the data channel; a transmission device (451), which is designed to output data that is to be transmitted from the communication apparatus via the interface to the data channel using a signal frequency; and a conditioning apparatus (453) according to one of the preceding claims for conditioning the data channel.

6. Sensor apparatus for a battery cell (110) of a multi-cell battery (100), having the following features: a detection device (343) for detecting sensor data with respect to the battery cell (110); and a communication apparatus (341) according to Claim 5, which is designed to receive the sensor data from the detection device and to generate the data to be transmitted based on the sensor data.

7. Battery element (120) for a multi-cell battery (100), wherein the battery element has the following features: a battery cell (110) of the multi-cell battery, wherein the battery cell (100) has a first power supply line (561) and a second power supply line (562); and a sensor apparatus (115) according to Claim 6.

8. Multi-cell battery (100), having the following features:
at least two battery elements (120) according to Claim 7, which are arranged in a series circuit or in a parallel circuit.

9. Method for conditioning a data channel (800) of at least one battery cell (110) of a multi-cell battery (100), which comprises the following steps:
electrically conductively connecting a conditioning apparatus (453) to a first power supply line (561) of the battery cell (110) and a second power supply line (562) of the battery cell (110);
conditioning (701) a signal frequency suitable for transmitting data via the data channel of the at least one battery cell (110) and/or an AC resistance (Z; Zᵥₑᵣ) of the data channel of the at least one battery cell (110) by means of the conditioning apparatus (453), wherein the conditioning apparatus (453) is designed to couple the at least one switchable capacitance (565, 566) and the at least one switchable inductance (567) to the data channel (800) by way of switches to power supply lines (561, 562) of the battery cell (110) by means of fields (455) of the capacitances (565, 566) and inductances (567) or other combinations of at least one inductance (567) and in addition or as an alternative at least one capacitance (565, 566) such that the data channel (800) runs via at least one of the power supply lines (561, 562) of the at least one battery cell (110) of the multi-cell battery.

## Revendications

1. Dispositif de conditionnement (453) pour conditionner un canal de données (800) d'au moins une cellule de batterie (110) d'une batterie multicellulaire (100), dans lequel le dispositif de conditionnement (453) est réalisé pour conditionner une fréquence de signal adaptée à la transmission de données par le biais du canal de données et/ou une impédance (Z ; Zᵥₑᵣ) du canal de données de l'au moins une cellule de batterie (110), le dispositif de conditionnement (453) comportant au moins une capacité commutable (565) et au moins une inductance commutable (567) et **caractérisé en ce que** le dispositif de conditionnement (453) est commuté entre une première ligne d'alimentation de puissance (561) et une deuxième ligne d'alimentation de puissance (562) de l'au moins une cellule de batterie (110) de la batterie multicellulaire (100), et est réalisé pour coupler l'au moins une capacité commutable et l'au moins une inductance commutable avec le canal de données (800), de sorte que le canal de données (800) passe par au moins une des lignes d'alimentation de puissance (561, 562) de l'au moins une cellule de batterie (110) de la batterie multicellulaire, afin de conditionner l'impédance (Z ; Z_{Ver}) du canal de données pour la transmission de données par le biais d'au moins une des lignes d'alimentation de puissance (561, 562) de l'au moins une cellule de batterie (110) de la batterie multicellulaire.

2. Dispositif de conditionnement (453) selon la revendication 1, le dispositif de conditionnement (453) étant réalisé pour régler l'impédance (Z ; Z_{Ver}) d'une première ligne d'alimentation de puissance (561) de la cellule de batterie (110), d'une deuxième ligne d'alimentation de puissance (562) de la cellule de batterie (110), d'une connexion électrique entre la première ligne d'alimentation de puissance et la deuxième ligne d'alimentation de puissance, d'une paroi de boîtier de cellule de la cellule de batterie (110) ou d'un boîtier de batterie (108) de la batterie multicellulaire (100).

3. Dispositif de conditionnement (453) selon l'une des revendications précédentes, doté d'un moyen de réception, lequel est réalisé pour recevoir un signal, et le dispositif de conditionnement (453) étant réalisé pour conditionner le canal de données (800) en utilisant le signal.

4. Dispositif de conditionnement (453) selon l'une des revendications précédentes, lequel est réalisé pour augmenter l'impédance (Z ; Z_{Ver}) en rapport avec la fréquence du signal dans un premier état de fonctionnement et pour diminuer l'impédance en rapport avec la fréquence du signal dans un deuxième état de fonctionnement.

5. Dispositif de communication (341) pour transmettre des données par le biais d'un canal de données s'étendant canal de données (800) d'une cellule de batterie (110) d'une batterie multicellulaire (100), doté des caractéristiques suivantes :
une interface (351, 353) pour raccorder de manière électriquement conductrice le dispositif de communication au canal de données ; un moyen d'émission (451), lequel est réalisé pour émettre depuis le dispositif de communication des données à transmettre sur le canal de données -par le biais de l'interface en utilisant une fréquence de signal ; et un dispositif de conditionnement (453) selon l'une des revendications précédentes pour conditionner le canal de données.

6. Dispositif de capteur pour une cellule de batterie (110) d'une batterie multicellulaire (100), doté des caractéristiques suivantes : un moyen de saisie (343) pour saisir des données de capteur concernant la cellule de batterie (110) ; et un dispositif de communication (341) selon la revendication 5, lequel est réalisé pour recevoir les données de capteur depuis le moyen de saisie et pour produire les données à transmettre en se basant sur les données de capteur.

7. Élément de batterie (120) pour une batterie multicellulaire (100), dans lequel l'élément de batterie comporte les caractéristiques suivantes : une cellule de batterie (110) de la batterie multicellulaire, dans lequel la cellule de batterie (100) comporte une première ligne d'alimentation de puissance (561) et une deuxième ligne d'alimentation de puissance (562) ; et un dispositif de capteur (115) selon la revendication 6.

8. Batterie multicellulaire (100), dotée des caractéristiques suivantes :
au moins deux éléments de batterie (120) selon la revendication 7, lesquels sont agencés dans un branchement en série ou dans un branchement en parallèle.

9. Procédé pour conditionner un canal de données (800) d'au moins une cellule de batterie (110) d'une batterie multicellulaire (100), comprenant les étapes suivantes : raccordement de manière électriquement conductrice d'un dispositif de conditionnement (453) à une première ligne d'alimentation de puissance (561) de la cellule de batterie (110) et à une deuxième ligne d'alimentation de puissance (562) de la cellule de batterie (110) ; conditionnement (701), au moyen du dispositif de conditionnement (453), d'une fréquence de signal adaptée à la transmission de données par le biais du canal de données de l'au moins une cellule de batterie (110) et/ou d'une impédance (Z ; Z_{Ver}) du canal de données de l'au moins une cellule de batterie (110), dans lequel le dispositif de conditionnement (453) est réalisé au moyen de champs (455) à partir de capacités (565, 566) et d'inductances (567) ou d'autres combinaisons composées d'au moins une inductance (567) et en outre ou alternativement d'au moins une capacité (565, 566), afin de coupler l'au moins une capacité commutable (565, 566) et l'au moins une inductance commutable (567) avec le canal de données (800) par le biais de commutateurs avec les lignes d'alimentation de puissance (561, 562) de la cellule de batterie (110), de sorte que le canal de données (800) passe par au moins une des lignes d'alimentation de puissance (561, 562) de l'au moins une cellule de batterie (110) de la batterie multicellulaire.
